Europäisches Patentamt

European Patent Office

Office européen des brevets

(11) Veröffentlichungsnummer: **0 498 195 A2**

## EUROPÄISCHE PATENTANMELDUNG

(21) Anmeldenummer: **92100813.2**

(22) Anmeldetag: **20.01.92**

(51) Int. Cl.5: **C08F 8/12**, C08F 8/44, C08F 222/04, //(C08F222/04, 210:14,216:18)

(30) Priorität: **08.02.91 DE 4103865**

(43) Veröffentlichungstag der Anmeldung: **12.08.92 Patentblatt 92/33**

(84) Benannte Vertragsstaaten: **BE DE ES FR GB IT SE**

(71) Anmelder: **BASF Aktiengesellschaft Carl-Bosch-Strasse 38 W-6700 Ludwigshafen(DE)**

(72) Erfinder: **Aydin, Oral, Dr. Sophienstrasse 14 W-6800 Mannheim 1(DE)**
Erfinder: **Denzinger, Walter Wormser Landstrasse 65 W-6720 Speyer(DE)**
Erfinder: **Dersch, Rolf, Dr. Kastanienweg 11 c W-6730 Neustadt(DE)**
Erfinder: **Franzmann, Gernot, Dr. Im Woogtal 13 W-6719 Bobenheim(DE)**
Erfinder: **Greif, Norbert, Dr. Im Woogtal 3 W-6719 Bobenheim(DE)**
Erfinder: **Hartmann, Heinrich, Dr. Weinheimer Strasse 46 W-6703 Limburgerhof(DE)**
Erfinder: **Wistuba, Eckehardt, Dr. Im Obergarten 7 W-6702 Bad Duerkheim(DE)**

(54) **Verwendung von Copolymerisaten auf Basis von langkettigen Monoolefinen und/oder Alkylvinylethern und ethylenisch ungesättigten Dicarbonsäureanhydriden zum Hydrophobieren von dispersionsgebundenen Dichtungsmassen, Putzen, Anstrichstoffen und Bauklebern.**

(57) Verwendung von Copolymerisaten, die durch radikalische Copolymerisation von

(a) 30 bis 50 mol-% $C_{13}$- bis $C_{40}$-Monoolefinen und/oder $C_{10}$- bis $C_{40}$-Alkylvinylethern mit

(b) 50 bis 70 mol-% ethylenisch ungesättigten $C_4$- bis $C_8$-Dicarbonsäureanhydriden

erhältlich sind, als Mittel zum Hydrophobieren von dispersionsgebundenen Dichtungsmassen, Putzen, Anstrichstoffen und Bauklebern.

EP 0 498 195 A2

Die vorliegende Erfindung betrifft die Verwendung von Copolymerisaten, die durch radikalische Copolymerisation von

(a) 30 bis 50 mol-% $C_{13}$- bis $C_{40}$-Monoolefinen und/oder $C_{10}$- bis $C_{40}$-Alkylvinylethern mit

(b) 50 bis 70 mol-% ethylenisch ungesättigten $C_4$- bis $C_8$-Dicarbonsäureanhydriden

erhältlich sind als Mittel zum Hydrophobieren von dispersionsgebundenen Dichtungsmassen, Putzen, Anstrichstoffen und Bauklebern.

Um die Wasserfestigkeit dispersionsgebundener Dichtungsmassen, Putze, Anstrichstoffe und Baukleber zu verbessern, werden häufig Hydrophobierungsmittel zugesetzt.

Als Hydrophobierungsmittel werden Silikone, Paraffine, Ethylenwachsdispersionen und Metallseifen, wie z.B. Zinkstearat ferner Distearyldiketen verwendet. Der Einsatz von Silikonen führt häufig aufgrund von Unverträglichkeiten zu Oberflächenstörungen, wie z.B. Fischaugen. Weiterhin ist die Überstreichbarkeit nicht gewährleistet, da die Silikone an die Oberfläche wandern und somit die Haftung negativ beeinflussen. Ethylenwachsdispersionen zeigen im allgemeinen keine Verlaufsstörungen, setzten in niedrig pigmentierten Farben jedoch den Glanz herab; sie wirken also häufig als Mattierungsmittel. Darüberhinaus ist die hydrophobierende Wirkung nur mäßig, da diese Ethylenwachsidspersionen große Emulgatormengen enthalten, die häufig in Mengen von 4 bis 15 %, bezogen auf Wachs, eingesetzt werden.

Die Metallseifen, z.B. Zinkstearat, lassen sich nur schwer in wäßrigen Anstrichstoffen homogen verteilen. Außerdem wirken sie mattierend. Ionenempfindliche Dispersionen können durch die Metallseifen koagulieren.

Distearyldiketen als solches oder in organischen Lösemitteln gelöst, läßt sich nicht gut in wäßrige Anstrichstoffe und Putze einarbeiten.

Weiterhin läßt sich die Wasserfestigkeit durch Zusatz reaktiver Substanzen, wie Melamin-, Harnstoff- und Phenolharze, ferner Alkylamino- oder Alkylchlorsilane verbessern. Erstere sind erst bei höheren Temperaturen wirksam, die Silane beeinträchtigen die Lagerstabilität der wäßrigen Dispersionssysteme (vgl. Römpp, 1983, Band 3, S. 1796, Frank'sche Verlagsanstalt W. Keller & Co., Stuttgart sowie H. Reinhard, Dispersionen synthetischer Hochpolymerer, Teil II, Springer Verlag, Berlin 1969).

Aus der DE-OS 3 733 172 sind Kraftstoffe für Ottomotoren bekannt, die u.a. geringe Mengen an Copolymerisaten aus (a) $C_1$- bis $C_{30}$-Alkylvinylethern oder Mischungen aus $C_1$- bis $C_{30}$-Alkylvinylethern und Olefinen mit 2 bis 40 C-Atomen und (b) Maleinsäureanhydrid enthalten, eine Molmasse von 500 bis 20 000 g/Mol aufweisen und bei denen die Anhydridgruppen der Copolymerisate ganz oder teilweise mit wäßrigen Alkalimetall- oder Erdalkalimetallbasen umgesetzt sind und der Rest der Carboxylgruppen mit Alkoholen und/oder Aminen in die entsprechenden Ester- und/oder Amidgruppen und/oder Ammoniumsalze umgesetzt ist.

Der Erfindung lag die Aufgabe zugrunde, ein verbessertes Mittel für die Hydrophobierung von Dichtungsmassen, Putzen, Anstrichstoffen und Bauklebern zur Verfügung zu stellen.

Die Aufgabe wurde erfindungsgemäß gelöst durch die Verwendung von Copolymerisaten, die durch radikalische Copolymerisation von

(a) 30 bis 50 mol-% $C_{13}$- bis $C_{40}$-Monoolefinen und/oder $C_{10}$- bis $C_{40}$-Alkylvinylethern mit

(b) 50 bis 70 mol-% ethylenisch ungesättigten $C_4$- bis $C_8$-Dicarbonsäureanhydriden

erhältlich sind als Mittel zum Hydrophobieren von dispersionsgebundenen Dichtungsmassen, Putzen, Anstrichstoffen und Bauklebern.

Außerdem wurde gefunden, daß Copolymerisate, deren Anhydridgruppen nach der Polymerisation solvolysiert worden waren, gut zur Hydrophobierung von Dichtungsmassen, Putzen, Anstrichstoffen und Bauklebern geeignet sind.

Weiterhin wurde gefunden, daß Copolymerisate, deren Anhydridgruppen solvolysiert und die dabei entstandenen Carboxylgruppen zu mindestens 10 % mit Basen neutralisiert worden waren, besonders gut als Hydrophobierungsmittel geeignet sind.

Weiterhin umfaßt die Erfindung dispersionsgebundene Dichtungsmassen, Putze, Anstrichstoffe und Baukleber, die die oben genannten Copolymerisate enthalten.

Die Copolymerisate sind beispielsweise aus der DE-OS 3 733 172 bekannt. Sie werden durch Copolymerisieren der Monomeren der Gruppe (a) mit den Monomeren der Gruppe (b), gegebenenfalls Solvolysieren der Anhydridgruppen der Copolymerisate und partielle Neutralisation der bei der Solvolyse entstehenden Carboxylgruppen hergestellt.

Als Monomere der Gruppe (a) kommen $C_{10}$- bis $C_{40}$-Alkylvinylether oder Mischungen dieser Alkylvinylether mit $C_{13}$- bis $C_{40}$-Monoolefinen in Betracht. Zu den Alkylvinylethern gehören beispielsweise n-Decylvinylether, Dodecylvinylether, Isododecylvinylether, n-Tridecylvinylether, Isotridecylvinylether, n-Tetradecylvinylether, n-Hexadecylvinylether, n-Octadecylvinylether, n-Eicosylvinylether, n-Docosylvinylether, n-Tetracosylvinylether, n-Hexacosylvinylether, n-Octacosylvinylether, Oleylvinylether und Mischungen der genannten Alkylvinylether.

Geeignete Monoolefine mit 13 bis 40 Kohlenstoffatomen sind beispielsweise Tetradecen-1, Hexadecen-1, Octadecen-1, $C_{20}$-Olefin-1, $C_{22}$-Olefin-1, $C_{24}$-Olefin-1, $C_{20}$- bis $C_{24}$-Olefin-1, $C_{24}$- bis $C_{28}$-Olefin-1, $C_{30}$-Olefin-1, $C_{35}$-Olefin-1 und $C_{40}$-Olefin-1. Die Olefine bzw. Mischungen von Olefinen sind Handelsprodukte. Die Olefine können von der Herstellung her geringe Mengen an inerten Kohlenwasserstoffen enthalten, z.B. bis zu etwa 5 Gew.-%. Die Olefine werden üblicherweise in der im Handel erhältlichen Qualität eingesetzt. Sie brauchen keiner besonderen Reinigung unterworfen zu werden. Die bevorzugten Olefine sind $C_{16}$- bis $C_{30}$-Olefine.

Die genannten Olefine werden entweder allein oder in Mischung mit den genannten Alkylvinylethern bei der Copolymerisation als Monomer der Gruppe (a) eingesetzt. Die genannten Alkylvinylether können aber auch allein als Monomer der Gruppe (a) verwendet werden. Der Anteil der Alkylvinylether und der Olefine kann jeweils 0 bis 100, vorzugsweise jeweils 10 bis 90 Gew.-% betragen.

Als Komponente (b) der Copolymerisate kommen monoethylenisch ungesättigte $C_4$- bis $C_8$-Dicarbonsäureanhydride in Betracht, z.B. Maleinsäureanhydrid, Itaconsäureanhydrid, Mesaconsäureanhydrid, Citraconsäureanhydrid und Methylenmalonsäureanhydrid und Mischungen untereinander. Von den genannten Anhydriden werden bevorzugt $C_4$-$C_6$-Dicarbonsäureanhydride, insbesondere Maleinsäureanhydrid verwendet.

Die Copolymerisate enthalten 30 bis 50 mol-% Monomere der Gruppe (a) und 50 bis 70 mol-% der genannten Dicarbonsäureanhydride einpolymerisiert und haben im allgemeinen eine Molmasse von 500 bis 20 000, vorzugsweise 800 bis 10 000 g/Mol. Sie sind insbesondere dadurch erhältlich, daß man die Monomeren (a) und (b) im Molverhältnis 1:1 bis 1:2 polymerisiert. Vorzugsweise polymerisiert man die Monomeren (a) und (b) im Molverhältnis von etwa 1:1 oder verwendet einen maximal 10 gew.-%igen Überschuß an Monomeren der Komponente (b).

Die Copolymerisate können nach allen bekannten üblichen Polymerisationsverfahren hergestellt werden, z.B. Substanz-, Suspensions-, Fällungs- und Lösungspolymerisation. Die Copolymerisation wird vorzugsweise in Gegenwart von Radikale bildenden Verbindungen durchgeführt. Man benötigt davon im allgemeinen 0 bis 10, vorzugsweise 0,2 bis 5 Gew.-%, bezogen auf die bei der Copolymerisation eingesetzten Monomeren. Bei allen genannten Polymerisationsverfahren wird unter Ausschluß von Sauerstoff gearbeitet, vorzugsweise in einem Stickstoffstrom. Für alle Polymerisationsmethoden werden die üblichen Apparaturen verwendet, z.B. Autoklaven und Kessel, die beispielsweise mit Anker-, Blatt-, Impeller- oder Mehrstufenimpuls-Gegenstrom-Rührern ausgestattet sind. Besonders bevorzugt ist die Substanzpolymerisation der Monomeren der Gruppen (a) und (b). Sie wird bei Temperaturen von 80 bis 300, vorzugsweise von 120 bis 200°C durchgeführt, wobei die niedrigste zu wählende Polymerisationstemperatur vorzugsweise etwa mindestens 20°C über der Glastemperatur des gebildeten Polymeren liegt. Je nach Molekulargewicht, das die Copolymerisate haben sollen, werden die Polymerisationsbedingungen gewählt. Polymerisation bei hohen Temperaturen ergibt Copolymerisate mit niedrigen Molekulargewichten, während bei niedrigeren Polymerisationstemperaturen Polymerisate mit höheren Molekulargewichten entstehen. Auch die Menge des Polymerisationsinitiators hat einen Einfluß auf das Molekulargewicht. Man benötigt im allgemeinen 0 bis 10 Gew.-%, bezogen auf die bei der Polymerisation eingesetzten Monomeren, an Radikale bildenden Polymerisationsinitiatoren. Höhere Initiatormengen führen hierbei zu Copolymerisaten mit niedrigeren Molekulargewichten. Die Monomeren (a) und (b) können bei Temperaturen von oberhalb 200°C auch in Abwesenheit von Polymerisationsinitiatoren copolymerisiert werden. D.h. ein Einsatz von Initiatoren ist nicht unbedingt erforderlich, weil die Monomeren (a) und (b) bei Temperaturen von oberhalb 200°C auch in Abwesenheit von Initiatoren bereits radikalisch polymerisieren.

Geeignete Polymerisationsinitiatoren sind beispielsweise Acetylcyclohexansulfonylperoxid, Diacetylperoxidicarbonat, Dicyclohexylperoxidicarbonat, Di-2-ethylhexylperoxidicarbonat, Tertiär-butylperneodecanoat, 2,2'-Azo-bis(4-methoxy-2,4-dimethylvaleronitril), Tertiär-butylperpivalat, Tertiär-butylper-2-ethyl-hexanoat, Tertiär-butylpermaleinat, 2,2'-Azobis(isobutyronitril), Bis-(tertiär-butylperoxi)cyclohexan, Tertiär-butylperoxiisopropylcarbonat, Tertiär-butylperacetat, Di-tertiär-butylperoxid, Di-tertiäramylperoxid, Cumolhydroperoxid und Tertiär-butylhydroperoxid. Die Initiatoren können allein oder in Mischung untereinander angewendet werden. Sie werden bei der Substanzpolymerisation vorzugsweise separat oder in Form einer Lösung oder Dispersion in dem Monomer der Komponente (a) in den Polymerisationsreaktor eingebracht. Bei der Copolymerisation können selbstverständlich auch Redox-Coinitiatoren mitverwendet werden, z.B. Benzoin, Dimethylanilin, Ascorbinsäure sowie organisch lösliche Komplexe von Schwermetallen, wie Kupfer, Cobalt, Eisen, Mangan, Nickel und Chrom. Die Mitverwendung von Redox-Coinitiatoren gestattet es, die Polymerisation bei tieferer Temperatur durchzuführen. Die üblicherweise verwendeten Mengen an Redox-Coinitiatoren betragen etwa 0,1 bis 2000, vorzugsweise 0,1 bis 1000 ppm, bezogen auf die eingesetzten Mengen an Monomeren. Falls das Monomergemisch an der unteren Grenze des für die Polymerisation in Betracht kommmenden Temperaturbereiches anpolymerisiert und anschließend bei einer höheren Temperatur auspolymerisiert wird, ist es zweckmäßig, mindestens zwei verschiedene Initiatoren zu verwenden, die bei unterschiedlichen Temperaturen zerfallen, so daß in jedem Temperaturintervall eine ausreichende Konzentration an Radikalen zur Verfügung steht.

Um niedrigmolekulare Polymerisate herzustellen, ist es oft zweckmäßig, die Copolymerisation in Gegenwart von Reglern durchzuführen. Hierfür können übliche Regler verwendet werden, wie z.B. $C_1$- bis $C_4$-Aldehyde, Ameisensäure und organische SH-Gruppen enthaltende Verbindungen, wie 2-Mercaptoethanol, 2-Mercaptopropanol, Mercaptoessigsäure, Mercaptopropionsäure, tertiär-Butylmercaptan, n-Dodecylmercaptan und tertiär-Dodecylmercaptan. Die Polymerisationregler werden im allgemeinen in Mengen von 0,1 bis 10 Gew.-%, bezogen auf die Monomeren, eingesetzt.

Die Copolymerisation kann kontinuierlich oder diskontinuierlich durchgeführt werden. Beispielsweise kann man einen oder mehrere Alkylvinylether, oder ein oder mehrere Olefine oder Mischungen aus Alkylvinylethern und mindestens einem Olefin im Reaktor vorlegen und unter Rühren auf die gewünschte Polymerisationstemperatur erhitzen. Sobald die im Reaktor vorgelegten Monomeren die gewünschte Polymerisationstemperatur erreicht haben, dosiert man das ethylenisch ungesättigte Dicarbonsäureanhydrid zu. Falls ein Initiator eingesetzt wird, wird er dem Reaktionsgemisch, vorzugsweise separat oder gelöst in einem zur Polymerisation gelangenden Monomer der Gruppe (a) zudosiert. Der Polymerisationsregler wird, sofern er eingesetzt wird, entweder separat oder ebenfalls in einem Monomer der Gruppe (a) gelöst der polymerisierenden Mischung zugefügt. Die ethylenisch ungesättigten Carbonsäureanhydride, insbesondere Maleinsäureanhydrid, werden vorzugsweise in Form einer Schmelze dem Reaktionsgemisch zugegeben. Die Temperatur der Schmelze des Maleinsäureanhydrids kann im Bereich von 60 bis 100°C, vorzugsweise 70 bis 90°C, liegen.

Die Monomeren der Gruppen (a) und (b) können selbstverständlich auch nach Art einer Fällungs- und Suspensionspolymerisation hergestellt werden.

Bei der Fällungspolymerisation werden solche Lösemittel eingesetzt, in denen die Monomeren, d.h. Vinylether und/oder Olefin und Maleinsäureanhydrid, löslich und das gebildete Copolymere unlöslich ist und ausfällt. Solche Lösemittel sind beispielsweise aromatische Kohlenwasserstoffe wie Benzol, Toluol, o-Xylol, m-Xylol, p-Xylol sowie die technischen Xylolgemische, Ethylbenzol, Cumol sowie Halogenwasserstoffe wie Methylenchlorid, 1,1- und 1,2-Dichlorethan, 1,1,1-Trichlorethan, 1,1,2-Trichlorethylen, 1,1,2-Trichlorethan, Perchlorethylen, 1,2-Dichlorpropan, Butylchlorid, 1,1,2-Trichlor-1,2,2-trifluorethan, 1,1,1,2-Tetrachlor-2,2-difluorethan, 1,1,2,2-Tetrachlor-1,2-difluorethan und Ether wie Diethylether, Dipropylether, Dibutylether, Methyl-tert.-butylether, Diethylenglykoldimethylether und Mischungen untereinander.

Bei der Suspensionspolymerisation werden solche Lösemittel eingesetzt, in denen alle oder mindestens eines der Monomeren und die gebildeten Polymeren unlöslich sind. Hierfür geeignet sind geradkettige und verzweigte aliphatische und cycloaliphatische Kohlenwasserstoffe. Vorzugsweise seien beispielsweise genannt Pentan, Hexan, Heptan, Octan, Isooctan, Cyclohexan, Methylcyclohexan, Ethylcyclohexan, Dimethylcyclohexan, Diethylcyclohexan und Mischungen untereinander. Bei der Durchführung der Fällungspolymerisation ist es zweckmäßig, besonders, wenn die Konzentrationen an Monomer bzw. Copolymer mehr als 40 Gew.-% betragen, zur Verhinderung der Aggregatbildung in Gegenwart eines Schutzkolloids zu arbeiten. Bei der Suspensionspolymerisation ist es zwingend notwendig, in Gegenwart von Schutzkolloiden zu arbeiten, um unerwünschte Agglomerationen der entstehenden Polymerisate zu verhindern.

Als Schutzkolloide sind polymere Stoffe geeignet, die in Lösungsmitteln gut löslich sind und keine Reaktion mit den Monomeren eingehen. Geeignet sind beispielsweise Copolymere des Maleinsäureanhydrids mit $C_{12}$- bis $C_{30}$-Vinylalkylethern und/oder Olefinen mit 8 bis 20 C-Atomen sowie bevorzugt deren Monoester mit $C_{10}$- bis $C_{20}$-Alkoholen oder Mono- oder Diamide mit $C_{10}$- bis $C_{20}$-Alkylaminen sowie Polyalkylvinylether, deren Alkylgruppe 1 bis 20 C-Atome enthält, wie beispielsweise Polymethyl-, Polyethyl-, Polyisobutyl-sowie Polyoctadecylvinylether. Die zugesetzten Mengen an Schutzkolloid liegen üblicherweise bei 0,05 bis 4 Gew.-% (berechnet als eingesetzte Monomere), vorzugsweise 0,1 bis 2 Gew.-%, wobei es oftmals von Vorteil ist, mehrere Schutzkolloide zu kombinieren.

Bei der Polymerisation ist es zweckmäßig, das Lösemittel, das Schutzkolloid und ein Monomer im Reaktor vorzulegen und bei gewählter Polymerisationstemperatur unter intensivem Rühren das Comonomer und den Initiator sowie gegebenenfalls den Coinitiator und Regler zuzudosieren. Dabei ist es im allgemeinen unwesentlich, ob das Maleinsäureanhydrid vorgelegt wird und die Alkylvinylether und/oder Olefine zudosiert werden, oder ob die Alkylvinylether und/oder Olefine vorgelegt werden und das Maleinsäureanhydrid zudosiert wird. Natürlich ist es auch möglich, nur das Lösungsmittel und das Schutzkolloid vorzulegen und die Monomeren - Alkylvinylether und/oder Olefin und Maleinsäureanhydrid - gemeinsam zuzudosieren. Die Zulaufzeiten für Monomer und Initiator betragen im allgemeinen zwischen 1 und 10 Stunden, vorzugsweise 2 bis 5 Stunden. Es ist auch möglich, alle Einsatzstoffe gemeinsam in einem Reaktor zu polymerisieren, wobei jedoch Probleme mit der Wärmeabführung auftreten können, so daß eine solche Arbeitsweise weniger zweckmäßig ist. Die Konzentrationen der zu polymerisierenden Monomeren liegen im allgemeinen zwischen 20 und 80 Gew.-%, bevorzugt 30 bis 70 Gew.-%. Aus den Polymerisatsuspensionen können die Polymeren direkt in Verdampfern wie beispielsweise Bandtrocknern, Schaufeltrocknern, Sprühtrocknern und Wirbelbett-Trocknern, isoliert werden. Die Fällungs- und Suspensionspolymerisation ist besonders geeignet zur Herstellung von Copolymerisaten aus Maleinsäureanhydrid und Alkylvinylethern mit 10 bis 12 C-Atomen. Falls höherkettige Alkylvinylether und/oder Olefine verwendet werden, kann bereits der Fall eintreten, daß die gebildeten Copolymeren in den genannten Lösemittel löslich sind, so daß die Polymerisation bereits als Lösungspolymerisation anzusehen ist.

Die Lösungspolymerisation wird in Lösemitteln durchgeführt, in denen die Monomeren und die gebildeten Copolymeren löslich sind. Es sind hierfür alle Lösemittel geeignet, die diese Vorgabe erfüllen und die mit den Monomeren keine Reaktionen eingehen. Beispielsweise sind dies Aceton, Methylethylketon, Diethylketon, Methylisobutylketon, Ethylacetat, Butylacetat, Tetrahydrofuran und Dioxan, wobei zur Erzielung niedermolekularer Copolymerer Tetrahydrofuran und Dioxan besonders gut geeignet sind. Wie bei der Substanz-, Suspensions- und Fällungspolymerisation ist es auch hier zweckmäßig, das Lösemittel und eine Monomerkomponente vorzulegen und die zweite Komponente mit dem Initiator und gegebenenfalls Co-Initiator und Regler zuzudosieren. Dabei können Lösungsmittel und Maleinsäureanhydrid im Polymerisationsreaktor vorgelegt und nach Erreichen der Polymerisationstemperatur dann der Alkylvinylether und/oder das Olefin und der Initiator sowie gegebenenfalls Coinitiator und Regler zudosiert werden. Günstiger ist es jedoch, Lösemittel und Alkylvinylether und/oder Olefin vorzulegen und das Maleinsäureanhydrid sowie den Initiator und gegebenenfalls den Coinitiator und Regler bei der gewählten Polymerisationstemperatur zuzudosieren. Diese Arbeitsweise liefert weniger gefärbte Polymerlösungen. Die Konzentrationen der zu polymerisierenden Monomeren liegen im allgemeinen zwischen 20 und 80 Gew.-%, bevorzugt 30 und 70 Gew.-%. Das feste Copolymer kann problemlos durch Verdampfen des Lösemittels isoliert werden. Aber auch hier ist es zweckmäßig, ein Lösemittel zu wählen, in dem die weitere Umsetzung zum Ammonium-, Alkali- bzw. Erdalkalimetallsalz und mit Alkoholen und/oder Ammoniak oder Aminen erfolgen kann.

Die in der ersten Verfahrensstufe erhaltenen Copolymeren aus Alkylvinylethern und/oder Olefinen und Maleinsäureanhydrid oder den anderen in Betracht kommenden ethylenisch ungesättigten Carbonsäureanhydriden eignen sich gut zur Verbesserung der Wasserfestigkeit dispersionsgebundener Dichtungsmassen. Bevorzugt verwendet werden die Lösungen dieser Copolymerisate in Weichmachern, beispielsweise Chlorparaffinen, Phthalsäureestern, propoxylierten Kresolen, oder organischen Lösemitteln.

Die in den Copolymerisaten enthaltenen Anhydridgruppen können auch ganz oder teilweise zu den Ammonium-, Alkalimetall- bzw. Erdalkalimetallsalzen umgesetzt und, falls die Umsetzung zu den Ammonium-, Alkalimetall- bzw. Erdalkalimetallsalzen nur teilweise erfolgt, gegebenenfalls mit Alkoholen und/oder Aminen zu den Estern und/oder Aminen und/oder Ammoniumsalzen umgesetzt werden. Es ist jedoch ebenso möglich, die anschließende Umsetzung der Copolymeren in umgekehrter Reihenfolge durchzuführen, indem die Copolymeren zunächst mit Aminen, Ammoniak und/oder Alkoholen zu den entsprechenden Estern und/oder Amiden und/oder Ammoniumsalzen solvolysiert werden und danach in die Salze, beispielsweise in die Alkalimetall- bzw. Erdalkalimetallsalze übergeführt werden.

Die nach den oben beschriebenen Polymerisationsverfahren hergestellten Copolymerisate werden nach dem Abkühlen auf Raumtemperatur oder vorzugsweise in Form einer Schmelze, die eine Temperatur in dem Bereich von 80 bis 180°C, vorzugsweise 90 bis 150°C hat, solvolysiert. Die Solvolyse der Anhydridgruppen der Copolymerisate besteht im einfachsten Fall in einer Hydrolyse und anschließender Neutralisation. Es ist besonders vorteilhaft, in druckdichten Apparaturen zu arbeiten und darin direkt durch Zugabe von Wasser zu einer Schmelze der bei der Substanzpolymerisation erhältlichen Copolymerisate die Anhydridgruppen in Carboxylgruppen zu überführen und durch anschließende Zugabe von Basen mindestens 10 % der Carboxylgruppen der hydrolysierten Copolymerisate zu neutralisieren. Hydrolyse und Neutralisation können jedoch auch praktisch gleichzeitig durch Zugabe verdünnter wäßriger Basen zur Copolymerisatschmelze vorgenommen werden. Die Mengen an Wasser und an Neutralisationsmittel werden dabei so gewählt, daß 10 bis 60, vorzugsweise 20 bis 55 Gew.-% Feststoffe enthaltende Dispersionen oder Lösungen entstehen, die in den Handel gebracht werden. Daraus werden dann Präparationslösungen durch Verdünnen auf Feststoffgehalte von 0,5 bis 50 Gew.-% hergestellt.

Die durch Polymerisation der Monomeren (a) und (b) erhältlichen Copolymerisate können auch durch Zugabe von primären und/oder sekundären Aminen solvolysiert werden. Die Solvolyse wird dabei mit solchen Mengen an Aminen durchgeführt, daß 10 bis 50 % der aus den einpolymerisierten Monomeren (b) insgesamt bei einer vollständigen Hydrolyse entstehenden Carboxylgruppen amidiert sind. Nach der Bildung von Halbamid-Gruppen im Copolymerisat erfolgt die Neutralisation. Sie wird soweit geführt, daß mindestens 10 % der Carboxylgruppen des bei der Substanzpolymerisation anfallenden Copolymerisates neutralisiert werden.

Die Solvolyse kann auch durch Zugabe von Alkoholen zu einer Schmelze der bei der Substanzpolymerisation erhältlichen Copolymerisate vorgenommen werden. Man setzt dabei solche Mengen an Alkohol ein, daß 10 bis 50 % der aus den einpolymerisierten Dicarbonsäureeinheiten insgesamt entstehenden Carboxylgruppen verestert werden. Anschließend erfolgt eine Neutralisation, bei der mindestens 10 % der insgesamt aus dem Anhydridgruppen enthaltenden Copolymerisat entstehenden Carboxylgruppen neutralisiert sind.

Vorzugsweise werden jeweils 20 bis 50 % der aus den einpolymerisierten Dicarbonsäureanhydriden insgesamt entstehenden Carboxylgruppen amidiert oder verestert.

Als Neutralisationsmittel eignen sich beispielsweise Ammoniak, Amine, Alkalimetall- und Erdalkalimetallbasen, z.B. Natronlauge, Kalilauge, Natriumbicarbonat, Soda, Kaliumcarbonat, Magnesiumhydroxid, Calciumhydroxid, Bariumhydroxid sowie sämtliche Amine, die auch zur Amidierung der Copolymerisate eingesetzt werden. Vorzugsweise erfolgt die Neutralisation durch Zugabe von wäßriger Natronlauge zum Copolymerisat. Die Neutralisation der Anhydridgruppen enthaltenden Copolymerisate wird mindestens bis zu einem solchen Grad durchgeführt, daß man in Wasser dispergierbare Copolymerisate erhält. Dieser Neutralisationsgrad liegt bei mindestens 10 % der insgesamt aus den Anhydridgruppen entstehenden Carboxylgruppen. Der Neutralisationsgrad ist außerdem von der Kettenlänge des jeweils verwendeten Alkylvinylethers und/oder Olefins der Komponente (a) abhängig. Um gut in Wasser dispergierbare bzw. kolloidal lösliche Copolymerisate zu erhalten, wird beispielsweise ein Copolymerisat aus einem $C_{30}$-Alkylvinylether und Maleinsäureanhydrid zu mindestens 75 % neutralisiert, während beispielsweise ein Copolymerisat aus einem $C_{20}$-Alkylvinylether und Maleinsäureanhydrid bei einem Neutralisationsgrad von 50 % der aus diesem Copolymerisat entstehenden Carboxylgruppen bereits gut in Wasser dispergierbar ist. Bei einem Copolymerisat aus einem $C_{12}$-Alkylvinylether und Maleinsäureanhydrid reicht bereits ein Neutralisationsgrad von 20 % der aus dem einpolymerisierten Maleinsäureanhydrid entstehenden Carboxylgruppen für das Dispergieren des Copolymerisats in Wasser aus.

Zur Amidbildung kann man Ammoniak und primäre und sekundäre Amine einsetzen. Die Amidbildung erfolgt vorzugsweise in Abwesenheit von Wasser durch Reaktion der Anhydridgruppen des Copolymerisats mit Ammoniak oder den Aminen. Die in Betracht kommenden primären und sekundären Amine können 1 bis 40, vorzugsweise 3 bis 30 Kohlenstoffatome aufweisen. Geeignete Amine sind beispielsweise Methylamin, Ethylamin, n-Propylamin, Isopropylamin, n-Butylamin, Isobutylamin, Hexylamin, Cyclohexylamin, Methylcyclohexylamin, 2-Ethylhexylamin, n-Octylamin, Isotridecylamin, Talgfettamin, Stearylamin, Oleylamin, Dimethylamin, Diethylamin, Di-n-Propylamin, Di-Isopropylamin, Di-n-Butylamin, Di-Isobutylamin, Dihexylamin, Di-Cyclohexylamin, Di-Methylcyclohexylamin, Di-2-Ethylhexylamin, Di-n-Octylamin, Di-Isotridecylamin, Di-Talgfettamin, Di-Stearylamin, Di-Oleylamin, Ethanolamin, Di-Ethanolamin, n-Propanolamin, Di-n-Propanolamin und Morpholin. Vorzugsweise wird Morpholin verwendet.

Um die bei der Polymerisation erhaltenen Anhydridgruppen aufweisenden Copolymerisate partiell zu verestern, werden sie mit Alkoholen umgesetzt. Auch die Veresterung erfolgt vorzugsweise unter Ausschluß von Wasser. Geeignete Alkohole können 1 bis 40, vorzugsweise 3 bis 30 C-Atome enthalten. Es können primäre, sekundäre und tertiäre Alkohole Verwendung finden. Man kann sowohl gesättigte aliphatische Alkohole als auch ungesättigte Alkohole, wie beispielsweise Oleylalkohol, einsetzen. Vorzugsweise werden einwertige, primäre oder sekundäre Alkohole verwendet, z.B. Methanol, Ethanol, n-Propanol, Isopropanol, n-Butanol, Isobutanol, n-Pentanol und Isomere, n-Hexanol und Isomere, n-Octanol und Isomere, wie z.B. 2-Ethylhexanol, Nonanole, Decanole, Dodecanole, Tridecanole, Cyclohexanol, Talgfettalkohol, Stearylalkohol sowie die technisch durch Oxosynthese leicht zugänglichen Alkohole bzw. Alkoholgemische mit 9 bis 19 C-Atomen, wie z.B. $C_{9/11}$-Oxoalkohol, $C_{13/15}$-Oxoalkohol sowie Ziegleralkohole, die unter den Namen Alfol bekannt sind mit 12 bis 24 C-Atomen. Besonders bevorzugt werden Alkohole mit 4 bis 24 C-Atomen, wie z.B. n-Butanol, Isobutanol, Amylalkohol, 2-Ethylhexanol, Tridecanol, Talgfettalkohol, Stearylalkohol, $C_{9/11}$-Oxoalkohol, $C_{13/15}$-Oxoalkohol, $C_{12/14}$-Alfole und $C_{16/18}$-Alfole verwendet.

Nach der partiellen Umwandlung der Anhydridgruppen in Halbamid- oder Halbester-Gruppen erfolgt die Hydrolyse der noch vorhandenen Anhydridgruppen des Copolymerisats. Die Hydrolyse der restlichen Anhydridgruppen des Copolymerisats kann auch gleichzeitig mit der noch erforderlichen partiellen Neutralisation vorgenommen werden, indem man eine wäßrige Base zu dem partiell amidierten bzw. veresterten und noch Anhydridgruppen enthaltenden Copolymerisat zusetzt. Die Menge an Wasser und Basen wird so gewählt, daß die Konzentration der Copolymerisatdispersion oder Lösung vorzugsweise 20 bis 55 Gew.-% beträgt. Der pH-Wert der gebrauchsfertigen Mittel zum Hydrophobieren liegt in dem Bereich von etwa 4 bis 10.

Die so erhältlichen wäßrigen Copolymerisatdispersionen sind beständig und lagerstabil. Die erfindungsgemäßen Copolymerisate eignen sich besonders gut zur Verbesserung der Wasserfestigkeit dispersionsgebundener Dichtmassen, Putze, Anstrichstoffe und Baukleber, die mineralische Baustoffe, wie z.B. Calciumcarbonat und/oder Calcium-, Magnesium- oder Aluminiumsilikate, enthalten.

Die Herstellung der Putze, Anstrichstoffe oder Dichtungsmassen erfolgt in üblichen Mischern. Die erfindungsgemäßen Copolymerisate oder ihre Folgeprodukte werden i.a. während der Herstellung den Massen zugegeben. Sie können aber auch bereits der Bindemitteldispersion während oder nach dar Polymerisation zugegeben werden. Die Menge der erfindungsgemäßen Copolymerisate oder ihrer Folgeprodukte, die in diesen Massen enthalten ist, beträgt 0,01 bis 10 Gew.-%, vorzugsweise 0,01 bis 4 Gew.-%, bezogen auf die nicht getrocknete Zubereitung.

Trotz ihres hydrophoben Aufbaus zeigen die erfindungsgemäßen Lösungen oder Dispersionen ein gutes Dispergiervermögen für anorganische Füllstoffe wie beispielsweise Calciumcarbonat oder Aluminium-, Calcium-, Magnesiumsilikate, und auch feinteilige Pigmente wie Titandioxid oder die verschiedenfarbigen Eisenoxide. Sie können die üblicherweise eingesetzten polymeren Dispergiermittel auf Basis von Polyacrylsäure oder Diisobuten/Maleinsäureanhydrid-Copolymerisaten teilweise oder vollständig ersetzen und wie diese mit anorganischen Dispergiermitteln wie Natriumhexametaphosphat oder Tetrakaliumpyrophosphat kombiniert werden. Soll die dispergierende Wirkung bei Herstellung der Anstrichmittel oder Putze ausgenutzt werden, setzt man die erfindungsgemäßen Copolymerisate in Form der wäßrigen Lösung oder Dispersion vor dem Einrühren der Pigmente und Füllstoffe zu.

Durch die Verwendung der erfindungsgemäßen Copolymerisate werden Anstriche aus hochgefüllten Dispersionsfarben in ihrer Naßscheuerbeständigkeit stark verbessert. Die verwendete Menge liegt im Bereich von 0,01 bis 2 Gew.-% Copolymerisat, insbesondere bei 0,02 bis 1 Gew.-%, bezogen auf den gesamten Farbansatz. Die höhere Naßscheuerbeständigkeit ermöglicht es, Beschichtungsstoffe mit weniger Bindemittel herzustellen, die dennoch den Anforderungen der Norm hinsichtlich Wasch- und Scheuerbeständigkeit genügen, bzw. sie übertreffen.

Die Prozentangaben in den Beispielen sind, falls nicht anders angegeben, Gewichtsprozent. Die Molmassen der Copolymeren wurden durch Gelpermeationschromatographie bestimmt, wobei als Elutionsmittel Tetrahydrofuran und zur Eichung eng verteilte Fraktionen von Polystyrol eingesetzt wurden.

A Herstellung der Copolymerisate

Beispiel A1

In einem Reaktor aus Edelstahl, der mit einem Rührer, Zulaufvorrichtungen und einer Vorrichtung für das Arbeiten unter Stickstoff ausgestattet war, wurden 1195 g eines $C_{20}$-$C_{24}$-Olefin-1-Gemisches (Gulftene 20-24®, Gulf Oil Chemical Company, USA) unter ständigem Rühren in einem schwachen Stickstoffstrom auf eine Temperatur von 190°C erhitzt. Sobald diese Temperatur erreicht war, gab man innerhalb von 4 Stunden 329 g auf 70°C erhitztes Maleinsäureanhydrid und separat davon 16 g Di-tert.-Butylperoxid gleichmäßig zu. Die Polymerisationstemperatur wurde in dem Bereich von 185 bis 190°C gehalten. Nach Abschluß der Maleinsäureanhydrid- und Peroxidzugabe erhitzte man das Reaktionsgemisch noch 2 Stunden bei einer Temperatur von 190°C unter ständigem Rühren und kühlte es dann auf 90°C ab. Die viskose Schmelze wurde auf ein Blech entleert und nach Erstarren mechanische zerkleinert. Die Molmasse des Copolymeren betrug 8900 g pro Mol.

Beispiel A2

In dem oben beschriebenen Reaktor wurden 1195 g Gulftene 20-24® vorgelegt und in einem schwachen Stickstoffstrom auf eine Temperatur von 150°C erhitzt. Sobald die Temperatur von 150°C erreicht war, gab man unter ständigem Rühren innerhalb von 6 Stunden 392 g auf 70°C erhitztes Maleinsäureanhydrid und separat davon 16 g Di-tert.-Butylperoxid in flüssiger Form gleichmäßig zu. Danach wurde das Reaktionsgemisch noch 2 Stunden bei 150°C gerührt und auf 90°C abgekühlt. Innerhalb von einer halben Stunde wurden getrennt voneinander 320 g 50 %ige wäßrige Natronlauge und 5026 g Wasser zugegeben, das auf eine Temperatur von 90°C erhitzt worden war. Die Reaktionsmischung wurde noch 4 Stunden bei einer Temperatur von 90 bis 95°C gerührt und danach abgekühlt. Die bei Raumtemperatur schwach viskose wäßrige Dispersion hatte einen Feststoffgehalt von 25,2 %. Die Molmasse des nicht-hydrolysierten Copolymerisats betrug 8300 g pro Mol, 50 mol-% der insgesamt entstandenen Carboxylgruppen waren neutralisiert.

Beispiele A3 bis A7:

Gemäß Beispiel A2 wird mit dem in Tabelle 1 angegebenen Einsatzstoffen polymerisiert und anschlie-

ßend neutralisiert sowie dispergiert.

Tabelle 1

| Beispiel | Olefin bzw. Vinylalkylether | | Maleinsäure-anhydrid [g] | Ditertiärbutyl-peroxid [g] | Neutralisationsmittel | Wasser [g] |
|---|---|---|---|---|---|---|
| | Art | Menge [g] | | | | |
| A3 | C$_{20-24}$-Olefin-1 | 1195 | 392 | 16 | 103,6 g Ammoniak, 25 %ig | 6100 |
| A4 | Octadecylvinylether | 885 | 309 | 23,9 | 197 g NaOH, 50 %ig | 3785 |
| A5 | C$_{24-28}$-Olefin-1 | 1470 | 392 | 18,6 | 323 g NaOH, 50 %ig | 5965 |
| A6 | C$_{18}$-Olefin-1 | 2100 | 838,5 | 29,9 | 543 g NaOH, 50 %ig | 9446 |
| A7 | C$_{18}$-Olefin-1 Octadecylvinylether | 756 272 | 392 | 14,2 | 324 g NaOH, 50 %ig | 4583 |

Die physikalischen Daten zeigt Tabelle 2:

Tabelle 2

| Beispiel | Molmasse [g/mol] | Feststoffgehalt [%] |
|---|---|---|
| A3 | 8300 | 20,8 |
| A4 | 5600 | 24,3 |
| A5 | 9800 | 25,0 |
| A6 | 4800 | 24,1 |
| A7 | 5000 | 24,9 |

B Kunstharzgebundene Putze

Ein kunstharzgebundener Putz auf Basis einer 50 %igen Styrolacrylatdispersion mit einer MFT von 22°C und einer mittleren Teilchengröße von ca. 0,1 μm wird in einem üblichen Rührwerk nach folgendem Rezept hergestellt. Die Bestandteilmengen sind in Gewichtsteilen angegeben.

EP 0 498 195 A2

| | |
|---|---|
| Styrolacrylatdispersion (50 %ig) | 170 |
| Methylhydroxipropylcellulose, hochmolekular 3 %ig | 21 |
| Tetrakaliumpyrophosphat 50 %ig in Wasser | 5 |
| Entschäumer auf Siliconbasis | 4 |
| Konservierungsmittel | 2 |
| Testbenzin 180/210°C | 20 |
| Isobutylestergemisch der Glutar-, Bernstein- und Adipinsäure | 20 |
| Titandioxid Rutil | 32 |
| Calciumcarbonat 40 $\mu$m | 267 |
| Calciumcarbonat 130 $\mu$m | 80 |
| Aluminiumsilikat | 79 |
| Calciumcarbonat Granulat 1500 $\mu$m | 300 |
| | $\overline{1000}$ |

Beispiel B1 (Vergleichsbeispiel)

Der unter B hergestellte Putz wurde mit einem Spachtel in einen auf einer Glasplatte liegenden Metallring mit einem Innendurchmesser von 40 mm und einer Dicke von 5 mm gebracht. Nach 1 Tag Trocknung bei 23°C und 65 % rel. Luftfeuchtigkeit wurde der Ring entfernt und die Putzprobe 28 Tage bei 23°C und 65 % rel. Luftfeuchtigkeit getrocknet. Als Unterlage diente eine auf einen Holzrahmen aufgezogene Gaze.

Nach der Trocknung wurde die Wasseraufnahme der Putzproben nach einer Wasserlagerung von 24 Stunden bei 23°C durch Wägen bestimmt. Ihr Wert ist in der Tabelle 3 aufgelistet.

Beispiel B2 (Vergleichsbeispiel)

In 1000 g des unter B hergestellten Putzes wurden 3 g einer 65 %igen wäßrigen Paraffinwachs-Emulsion eingerührt.

Prüfergebnis siehe Tabelle 3.

Beispiel B3 (Vergleichsbeispiel)

In 1000 g des unter B hergestellten Putzes wurden 6 g einer 65 %igen wäßrigen Paraffinwachs-Emulsion eingerührt.

Prüfergebnis siehe Tabelle 3.

Beispiel B4

In 1000 g des unter B hergestellten Putzes wurden 7,3 g einer 25 %igen wäßrigen Zubereitung, wie in Beispiel A2 beschrieben, eingerührt.

Prüfergebnis siehe Tabelle 3.

Beispiel B5

In 1000 g des unter B hergestellten Putzes wurden 8,8 g einer 20,8 %igen Zubereitung, wie in Beispiel A3 beschrieben, eingerührt.

Prüfergebnis siehe Tabelle 3.

Beispiel B6

In 1000 g des unter B hergestellten Putzes wurden 17,6 g einer 20,8 %igen wäßrigen Zubereitung, wie in Beispiel A3 beschrieben, eingerührt.

Prüfergebnis siehe Tabelle 3.

Beispiel B7

9

In 1000 g des unter B hergestellten Putzes wurden 7,5 g einer 24,3 %igen wäßrigen Zubereitung, wie in Beispiel A4 beschrieben, eingerührt.

Prüfergebnis siehe Tabelle 3.

Beispiel B8

In 1000 g des unter B hergestellten Putzes wurden 7,3 g einer 25 %igen wäßrigen Zubereitung, wie in Beispiel A5 beschrieben, eingerührt.

Prüfergebnis siehe Tabelle 3.

Tabelle 3

Wasseraufnahmedaten der Beispiele B1 bis B8

| Beispiel | B1 | B2 | B3 | B4 | B5 | B6 | B7 | B8 |
|---|---|---|---|---|---|---|---|---|
| Zusatzstoff | | Zusatzmenge zum Putz B | | | | | | |
| Kein Zusatz | – | – | – | – | – | – | – | – |
| Wachsemulsion, 65 %ig | – | 3 | 6 | – | – | – | – | – |
| A2, 25,2 %ig | – | – | – | 7,3 | – | – | – | – |
| A3, 20,8 %ig | – | – | – | – | 8,8 | 17,6 | – | – |
| A4, 24,3 %ig | – | – | – | – | – | – | 7,5 | – |
| A5, 25,0 %ig | – | – | – | – | – | – | – | 7,3 |
| Wassernahme nach 24 Stunden [%] | 9,7 | 8,8 | 10,7 | 2,9 | 3,9 | 2,9 | 3,5 | 2,8 |
| Aussehen des Putzprüflings nach Wasserlagerung | gequollen ————————→ | | | hart ————————→ | | | | |

C Dichtungsmassen

Eine Dichtungsmasse auf Basis einer 65 %igen Polyacrylatdisperion mit einer Glastemperatur von -40°C wurde in einem üblichen Rührwerk nach folgendem Rezept hergestellt. Die Bestandteilmengen sind in Gew.-% angegeben.

| | |
|---|---|
| Polymerdisperion 65 %ig | 316 |
| Natronlauge, 10 %ig | 3 |
| Weichmacher, propoxiliertes Kresol mit 20 PO-Einheiten | 70 |
| Titandioxid Rutil | 50 |
| Na-Salz einer Polyacrylsäure 20 %ig | 1 |
| Calciumcarbonat | 560 |
| | 1000 |

Beispiel C1 (Vergleichsbeispiel)

Die unter C hergestellte Dichtungsmasse wurde in eine 10 mm breite und 10 mm tiefe und 100 mm lange Fuge gefüllt. Nach der Trocknung von 15 min bei 23°C und 65 % rel. Luftfeuchtigkeit wurde die Frühregenfestigkeit geprüft. Hierzu wurde die Dichtungsmasse, die im Winkel von 45° aufgestellt wurde, mit einer Dusche, die im Abstand von 35 cm befestigt ist, beregnet. Die Frühregenfestigkeit ist die Zeit, bis zu der das ablaufende Wasser sich trübt, d.h. die Dichtungsmasse beginnt, ausgewaschen zu werden.

Das Prüfergebnis ist in Tabelle 4 zusammengefaßt.

Beispiel C2

In die unter C hergestellte Dichtungsmasse (1500 g) wurden 20 g der im Beispiel A2 zubereiteten Mischung aus $C_{20}/C_{24}$-Olefin/MSA-Wachs, Wasser und NaOH gegeben.

Das Prüfergebnis ist in Tabelle 4 zusammengefaßt.

Beispiel C3

60 g $C_{20}/C_{24}$-Olefin/MSA wie in Beispiel A1 beschrieben, wurden in den 70 g Weichmacher der Dichtungsmassenrezeptur (siehe oben) gelöst. Diese Mischung (130 g) wurde beim Herstellen der Dichtungsmasse (Rezept C) anstelle der 70 g Weichmacher eingesetzt.

Das Prüfergebnis ist in Tabelle 4 zusammengefaßt.

Beispiel C4 (Vergleich)

In die unter C hergestellte Dichtungsmasse (1000 g) wurde 1 g $\gamma$-Aminopropyltriethoxisilan eingearbeitet.

Das Prüfergebnis ist in Tabelle 4 zusammengefaßt.

Tabelle 4

Prüfergebnisse der Frühregenfestigkeit der Dichtungsmassen Beispiele C1 bis C4

|                                  | Beispiele |      |      |      |
|----------------------------------|-----------|------|------|------|
|                                  | C1        | C2   | C3   | C4   |
| Zusatzstoff                      | Zusatzmenge in 1000 g Dichtungsmasse | | | |
| ohne                             | –         | –    | –    | –    |
| A2                               | –         | 20   | –    | –    |
| A1                               | –         | –    | 60   | –    |
| Silan γ-Amino- propyltriethoxi- silan | –    | –    | –    | 1    |
| Frühregen- festigkeit [s]        | 0         | 240  | 180  | 0    |

D Hochgefüllte Innenfarbe (PVK ca. 83 %)

Eine Dispersionsfarbe auf Basis einer 50 %igen Acrylatstyroldisperion (MFT ca. 22°C, mittlere Teilchengröße ca. 0,1 μm) wurde mit einem Dissolver entsprechend dem nachfolgenden Rezept (Vergleichsbeispiel D1) hergestellt (Mengenangaben in Gewichtsteilen):

| | |
|---|---|
| Wasser | 91 |
| Natriumhexametaphosphat, 10 %ig | 18,25 |
| Ammoniumpolyacrylat, 30 %ig | 2,5 |
| Ammoniak, 25 %ig | 2,5 |
| Konservierungsmittel | 3 |
| Methylhydroxiethylcellulose, hochmolekular, 2 %ig | 150 |
| Testbenzin 180 bis 210°C | 12 |
| Trimethylpentandiolmonoisobutyrat | 12 |
| Titandioxid Rutil | 71 |
| Aluminiumsilikat | 12 |
| Calciumcarbonat < 2 μm | 83 |
| Calciumcarbonat 5 μm | 417 |
| Fettalkoholethoxilat, 20 %ig | 6 |
| Entschäumer | 0,75 |
| Wasser | 28,3 |
| Acrylatstyroldisperion, 50 %ig | 90,7 |
| | 1000,00 |

In den Beispielen D2 bis D8 wurde analog verfahren; in dem Vergleichsbeispiel D2 wurden noch 40 Gew.-Teile Calciumstearat zugesetzt, bei D3 bis D8 wurden anstelle von Ammoniumpolyacrylat die erfindungsgemäßen Copolymerdispersionen eingesetzt wie in Tabelle 5 beschrieben.

Die erhaltenen Anstrichstoffe wurden auf Lenetafolie aufgezogen, und die Filme einer Scheuerprüfung entsprechend DIN 53 778, Teil 2 unterworfen. Die Ergebnisse der Scheuerprüfung sind in Tabelle 5 aufgelistet.

Tabelle 5

| Beispiel | Zusatzstoff [Gew.-Teile] | Anzahl Scheuercyclen |
|---|---|---|
| D1 (Vergleich) | 2,5 Ammoniumpolyacrylat, 30 %ig | 900 |
| D2 (Vergleich) | wie D1, zusätzlich 40 Calciumstearat | < 200 |
| D3 | 3,0 A1, 25,2 %ig | 1600 |
| D4 | 6,0 A1, 25,2 %ig | 2100 |
| D5 | 6,2 A6, 24,1 %ig | 2600 |
| D6 | 6,2 A4, 24,3 %ig | 2100 |
| D7 | 6,0 A5, 25,0 %ig | 1400 |
| D8 | 6,0 A7, 24,9 %ig | 2200 |

Durch den Einsatz der erfindungsgemäßen Copolymeren wurde die Scheuerbeständigkeit deutlich verbessert.

**Patentansprüche**

1.  Verwendung von Copolymerisaten, die durch radikalische Copolymerisation von
    (a) 30 bis 50 mol-% $C_{13}$- bis $C_{40}$-Monoolefinen und/oder $C_{10}$- bis $C_{40}$-Alkylvinylethern mit
    (b) 50 bis 70 mol-% ethylenisch ungesättigten $C_4$- bis $C_8$-Dicarbonsäureanhydriden
    erhältlich sind, als Mittel zum Hydrophobieren von dispersionsgebundenen Dichtungsmassen, Putzen, Anstrichstoffen und Bauklebern.

2.  Verwendung nach Anspruch 1, dadurch gekennzeichnet, daß die Anhydridgruppen der Copolymerisate nach der Polymerisation solvolysiert werden.

3.  Verwendung nach Anspruch 1, dadurch gekennzeichnet, daß die Anhydridgruppen der Copolymerisate solvolysiert werden und mindestens 10 % der bei der Solvolyse entstehenden Carboxylgruppen mit Basen neutralisiert werden.

4.  Verwendung nach einem der Ansprüche 1 bis 3, dadurch gekennzeichnet, daß die Anhydridgruppen enthaltenden Copolymerisate nach Art einer Substanzpolymerisation der Monomeren (a) und (b) bei Temperaturen von 80 bis 300°C erhältlich sind.

5.  Verwendung nach einem der Ansprüche 2 bis 4, dadurch gekennzeichnet, daß man die Solvolyse durch Zugabe von Wasser zu den bei der Polymerisation erhältlichen Copolymerisaten durchführt und mindestens 10 % der Carboxylgruppen der hydrolysierten Copolymerisate mit Ammoniak, Aminen, Alkalimetall- oder Erdalkalimetallbasen neutralisiert.

6.  Verwendung nach einem der Ansprüche 2 bis 4, dadurch gekennzeichnet, daß man die Solvolyse durch Zugabe von primären und/oder sekundären Aminen zu den bei der Polymerisation erhältlichen Copolymerisaten so durchführt, daß 10 bis 50 % der aus den einpolymerisierten Monomeren (b) insgesamt entstehenden Carboxylgruppen amidiert und mindestens 10 % der insgesamt entstehenden Carboxylgruppen neutralisiert sind.

7.  Verwendung nach einem der Ansprüche 2 bis 4, dadurch gekennzeichnet, daß man die Solvolyse durch Zugabe von Alkoholen zu den bei der Polymerisation erhältlichen Copolymerisaten so durchführt, daß 10 bis 50 % der aus den einpolymerisierten Monomeren (b) insgesamt entstehenden Carboxylgruppen verestert und mindestens 10 % der insgesamt entstehenden Carboxylgruppen neutralisiert sind.

8.  Dispersionsgebundene Dichtungsmassen, Putze, Anstrichstoffe und Baukleber, enthaltend ein Copolymerisat aus
    (a) 30 bis 50 mol-% $C_{13}$- bis $C_{40}$-Monoolefinen und/oder $C_{10}$- bis $C_{40}$-Alkylvinylethern mit
    (b) 50 bis 70 mol-% ethylenisch ungesättigten $C_4$- bis $C_8$-Dicarbonsäureanhydriden